(19) Europäisches Patentamt

European Patent Office

Office européen des brevets

(11) Publication number: **0 233 982 B1**

## EUROPEAN PATENT SPECIFICATION

(45) Date of publication of patent specification: **25.08.93**

(51) Int. Cl.⁵: **G01S 13/42**, G01S 7/22

(21) Application number: **86108294.9**

(22) Date of filing: **18.06.86**

(54) **2-D pulse doppler radar.**

(30) Priority: **21.02.86 IT 1950586**

(43) Date of publication of application:
**02.09.87 Bulletin 87/36**

(45) Publication of the grant of the patent:
**25.08.93 Bulletin 93/34**

(84) Designated Contracting States:
**AT BE CH DE FR GB LI LU NL SE**

(56) References cited:
**EP-A- 0 071 215**
**WO-A-80/01208**
**WO-A-85/00896**
**GB-A- 812 877**
**US-A- 4 005 415**

**FUNKSCHAU, vol. 202, no. 11, May 1981, pages 62-64, Munchen, DE; G. MÜCK: "An der Radar-Leine",**

(73) Proprietor: **CONTRAVES ITALIANA S.p.A.**
**Via Affile 102**
**I-00131 Roma(IT)**

(72) Inventor: **Bianucci, Leonetto, Dr.**
**Via Nomentana, 761**
**I-00137 Rome(IT)**
Inventor: **Aiosa, Alberto, Ing.**
**Via Oropa, 25**
**I-00145 Rome(IT)**
Inventor: **Fazio, Umberto, Ing.**
**Via Nicola Stenone, 45**
**I-00139 Rome(IT)**
Inventor: **Muscinelli, Marcello, Dr.**
**Via Cariati, 43**
**I-00178 Rome(IT)**

(74) Representative: **Forattini, Amelia et al**
**c/o Internazionale Brevetti Ingg. ZINI, MARANESI & C. S.r.l. Piazza Castello 1**
**I-20121 Milano (IT)**

## Description

The present invention relates generally to short-medium range 2-D air-route surveillance radars provided with a fan-beam type vertical radiation field and more particularly to radars provided also with target data extractor and track-while-scan (TWS) means with corresponding data link, equipped with plan position indicator (PPI) or the like.

Modern air-route surveillance radars,and particularly the short-to medium-range ones, operate in a variety of typical environmental conditions very different from one another.

The type of terrain over which the radar mostly effects its surveillance is variable (from flat terrain without vegetation or buildings to a mountainous region);
- the tactically significant meteorological conditions (such as visibility, precipitation, air turbulence) are obviously variable;
- the type of primary target against which an attack of aerial targets is expected is also variable (area, point) ; besides, the means themselves which in addition to the radar proper are used in the defense mission are variable (for example, any presence of early warning radar).

Consequently, both the type of aerial vehicle which is expected to be employed in the attack (helicopter, jet, guided bomb) and the concept and profile of attack (type of formation, trajectories and altitude, etc.) of the aerial targets are variable. For certain uses and conditions, therefore, the above surveillance radars will typically counteract mainly low level attacks; another time, attacks from high elevation angles and, another time again (or at times), both low and high level attacks.

In the abovementioned conditions, as is known to those who are familiar with these applications, it is tactically important for the radar surveillance sensor to have the shortest possible reaction time (or time interval from when a menace enters the field of action to when the radar discovers it and gives alarm), to provide - after the first detection - tracking data as accurate as possible and, if possible, in addition to range and bearing, also elevation data (altitude), these last two characteristics being important both for the defense weapon systems which will counteract those attacks, and for a quicker and more reliable menace evaluation made by the operator at the radar itself.

Besides, in order to prevent detection and position finding from enemy ESM (electronic support means) as well as attacks to the radar from ARM (anti-radiation missiles), it is always important for the surveillance radar to radiate in every case the minimum possible radiation beam pattern volume for the shortest possible time, in so far as surveillance requirements allow.

The known 2-D surveillance radars, being provided by their nature with fixed and rigid search patterns, obtained by rotating periodically around a vertical shaft an antenna having a limited fan beam width in the horizontal direction and an ample elevation width, equal to the maximum attack angle tactically expectable, are not adaptive with respect to the abovementioned significant changes of utilization and/or environment : in fact, they spend in all of the abovementioned conditions all of their awailable power for all of the time and for the whole elevation field for which the antenna has been designed. Not being adaptive with respect to an optimization of their search pattern schedule, they are unable - other conditions, such as power transmission, outline dimensions, complexity, costs being equal - to maximize the range of first detection of targets, without impairing other important features as well, such as, for instance, quality (accuracy) and quantity (actual maximum number) of tracked targets. Besides, said known 2-D radars are unable by their nature to provide any indication, even if rough, as to altitude (elevation) of the various targets detected and/or tracked.

Solutions to some of the abovementioned problems involving the use of those radar types which are universally known as 3-D are interesting because, by their nature, the 3-D radar capability of determining the altitude of the detected and/or tracked target is either
- additional to other tactically important characteristics typical of the abovementioned 2-D radars (such as reaction times, accuracy), which renders them decidedly more complex and costly, or
- as an alternative to (and to the detriment of) the typical characteristics mentioned above, which renders them operationally unacceptable.

The latter statement will become clear if one considers that, for example, the updating time for the target data, which affects, as is well known, both reaction times and trajectory data accuracies, other radar parameters being equal (such as horizontal spread of the fan beam, time of insistence on the target, total coverage in elevation required), is directly proportional to the number of discrete beams present in the search pattern schedules of the radar itself: a 2-D radar, for example, with an horizontal rotation of the antenna beam of one revolution per second, will radiate again a point in the space every second, while a single 3-D radar with 6 beams in elevation will do the same only every 6 seconds.

To sum it up, 3-D radars in comparison with 2-D radars, common features being equal, are much more complex, cumbersome and costly while, cost-complexity being equal, 3-D radars provide tactical operational performances practically unacceptable.

A coherent radar system combining a phased array antenna generating a wide elevation fan beam pattern for 2D tracking and a narrow directional beam pattern for 3D tracking is known from WO 85/00896. Pattern selection is performed by a control computer which however fails to provide for an efficient detection of simultaneously approaching targets flying at different levels.

A non coherent radar system is known from GB-A-812 877. This known system reduces ground clutter at low angles of elevation whilst not effecting any reduction of gain at high angle of elevation. Moreover, the known system includes two separate horns which are controlled to generate beams at different angles of elevation, whereat switching between elevations occurs after a complete cycle of the scan azimuth.

Starting from this state of the prior art, it is therefore an object of the present invention as described in claim 1 to provide an improved 2-D radar which, while keeping the position characteristics of reaction time and tracking data accuracy of a typical 2-D radar, and without the disadvantage of complexity and cost of 3-D radars, may additionally provide the radar operator and the users in data link connection with the radar with information, even if approximate, on the elevation of targets tracked by the radar tracker itself.

Another object of the invention is to provide the 2-D radar with means for adapting and optimizing the current field of surveillance and tracking in elevation depending on environment and on the targets revealed, so as to maximize in every condition the mean global frequency of updating of tracked target data, while optimizing its search pattern in a simple and effective way and avoiding to radiate into tactically insignificant or, even worse, dangerous regions.

A further object of the invention is to provide for a 2-D radar which generates two different radiation patterns that cover, during a single antenna revolution, both high and low portions of the elevation plane.

Above objects, as well as other objects which will become apparent hereinafter are achieved by a 2-D pulse doppler radar system for air-route surveillance as defined in the accompanying claims. The 2-D pulse doppler radar system includes a radiating antenna generating alternatively two fan beams which are different in elevation at different elevation angles. The radiating antenna is rotated mechanically at a constant angular speed $W_0$ around a vertical shaft, for a 360° coverage in the horizontal plane of the desired aerial space surveillance.

The radar includes also as an essential part of the invention a switch which permits to select in correspondence of every current tracking angle of the antenna in bearing, which of the two elevation fan beams is to be formed.

According to an advantageous development of the invention, indicated in claim 2, this selection is made and activated by the track-while-scan (TWS) "tracker" (known to those skilled in the art) provided in the computer associated to the radar and it is signalled to the operator through a known symbology on the PPI display of the radar; the tracker itself, then, by using this beam selection information sequential in time for each target, can go back, with known calculation algorithms, to the determination of a rough estimate of elevation for each target. The following operating possibilities are therefore opened by this development of the invention:

a) the operator is enabled to select simply and quickly the elevation field to be scanned, which may be limited either to the low beam or to the high beam, or it may include both of them; the switch is correspondingly positioned to supply continuously either the low feeder or the high feeder respectively, or it may be changed over from high beam to low beam every 360° of horizontal rotation according to a pre-established rigid repetitive "M + N" sequence, meaning that for M consecutive revolutions the illuminated beam shall be the low one, and successively, for N consecutive revolutions, the illuminated beam shall be the high one, after which the cycle shall repeat itself: in our application an example for N = M = 1 has been indicated;

b) in case of a surveillance cycle using the aforementioned "M + N" sequence, for all targets for which a tracking is in effect from the tracker program of the computer itself, an arrangement is made possible for interrupting said sequence during the short time intervals in which, based on the trajectory data extrapolated by the aforementioned tracker program, it is foreseen that the target may be illuminated only by the beam different from the current one, and therefore said arrangement shall change over the state of the switch in these time intervals, only to return immediately afterwards to the state defined by the aforementioned sequence; besides, the above change-over shall not be made cyclically for every track or once every K (where K is preestablished to be equal to 2,3,4 or the like) revolutions of the antenna in order not to leave an aerial space volume uncovered by surveillance, or when two targets on different beams are expected as radar echoes at just about the same instants (same azimuth angle): in this case the program logic shall go back to the rigid 1 + 1 alternative sequence for that angle;

c) in case of a surveillance angle having the "M + N" sequence mentioned at a) above, on the basis of past history, in the antenna revolutions, of the state of said switch and of the presence/absence of radar echoes in correspondence of the angles at which the various targets are expected, an estimate is made possible, using the known filtering and forecast systems, of the rough elevation of each target which in used, primarily, to forecast the optimum position of the switch for the next antenna revolution for every azimuth angle according to the logics mentioned at b) above, and secondly to provide trajectory data users (i.e. radar operator and data link users) with said rough elevation data for every target in addition to azimuth and range.

It has been mentioned above that the computer associated to the radar, which also performs the aforementioned tracking function, based on operating requirements set at the operator's control console and based on current trajectory tracking data shall currently determine, for every bearing angle of the antenna, the state of said elevation switch.

Thus, when environnemental or tactical conditions suggest to exclude the possibility of high level attacks, the operator shall always and constantly select via the computer the radiation on the lower beam only, between the two elevation alternatives available. The opposite will hold, when the expected menace is only on the higher portion of the surveillance pattern. In case a menace is expected both on the higher and the lower beam, the automatic logics, as a result of an initial selection operation which is always made by the operator, will instantly cause the switch to be kept alternately for one full antenna revolution on high beam and for one revolution on low beam; if during this surveillance phase a target is detected and therefore a track is generated, the invention provides to select automatically, through said switch, the elevation beam more suitable for illuminating the tracked target, so that within the deflection angle in which the tracker foresees to receive the echo and therefore the target data, the normal alternate high beam/ low beam surveillance program shall give priority, for a short instant, to the elevation beam where the target is estimated to be, only to return afterwards to the position foreseen by the scanning program. This takes place automatically,for every target tracked, said control and its actuation being performed in an extremely short time.

Suitable precautions and rules are foreseen in the above mentioned computer program to manage particular or exceptional situations as described below.

It is understood that the "one revolution high, one revolution low" alternation logics of the switch and the above examples of adaptive switching have been mentioned here by way of example only and not to limit the scope of the invention, which is valid in itself for different sequences or scanning successions in elevation.

Those skilled in the art will realize that the tracking precision will remain substantially the same as that of a 2-D radar system with an antenna rotating at a speed $W_0$.

A further advantageous development of the present invention, as indicated in Claim 3, permits to display to the radar operator in a simple, clear and unmistakable manner :

a) the current state of said switch, i.e. by showing, for each azimuth angle, which elevation radiation pattern is being emitted, via the presence or absence of an illuminated edge at the external margin of the PPI according to whether the elevation beam is high or low;

b) the rough estimated elevation of every target tracked by the above tracker, by means of two different symbols, one for low elevation targets and the other for high/medium elevation, said symbols being located, as usually happens, on the estimated PPI range and bearing position corresponding to each of them.

The aforementioned advantages, objects and pecularities of the invention will become more evident after examining the following description given in conjunction with the accompanying drawings and diagrams.

The preferred embodiment of the present invention will now be described with reference to the accompanying drawing, in which:

Figure 1 represents the space pattern of the fan beam center during a normal surveillance program of a wide search field;

Figure 2 represents the search pattern diagram in the elevation plane;

Figure 3 is a block diagram of the 2-D radar according to the present invention, including the man-machine interface (radar console and PPI) and the data link interface;

Figure 4 shows the time pattern of the switching sequences made by the antenna elevation switch in a particular case of search sequence (one "high" revolution, one "low" revolution) and with tracking of targets in the two beams themselves, which is useful for understanding the automatic mechanism of the switch;

Figure 5 is a schematic view of the radar PPI, in the presence of the target tracking in the two beams, which is useful for understanding the type of display and symbology associated with switching of elevation beams.

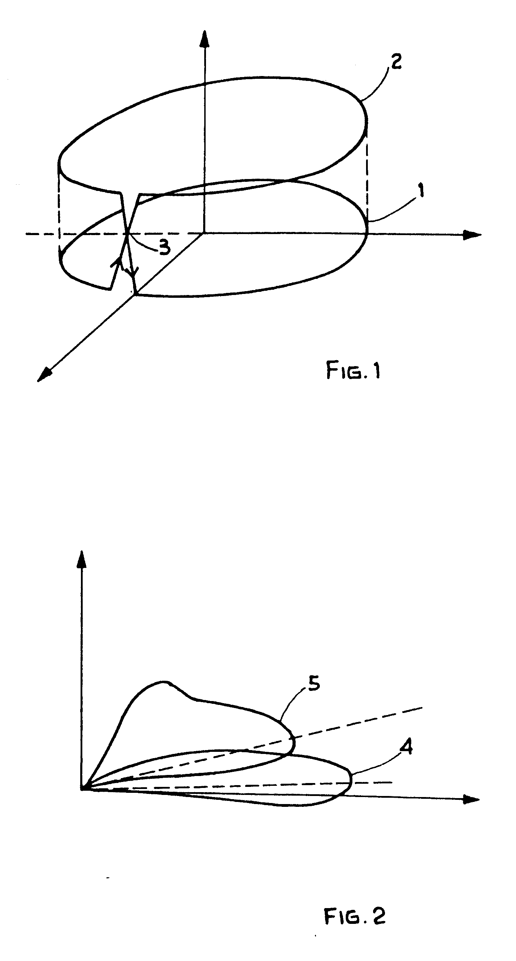

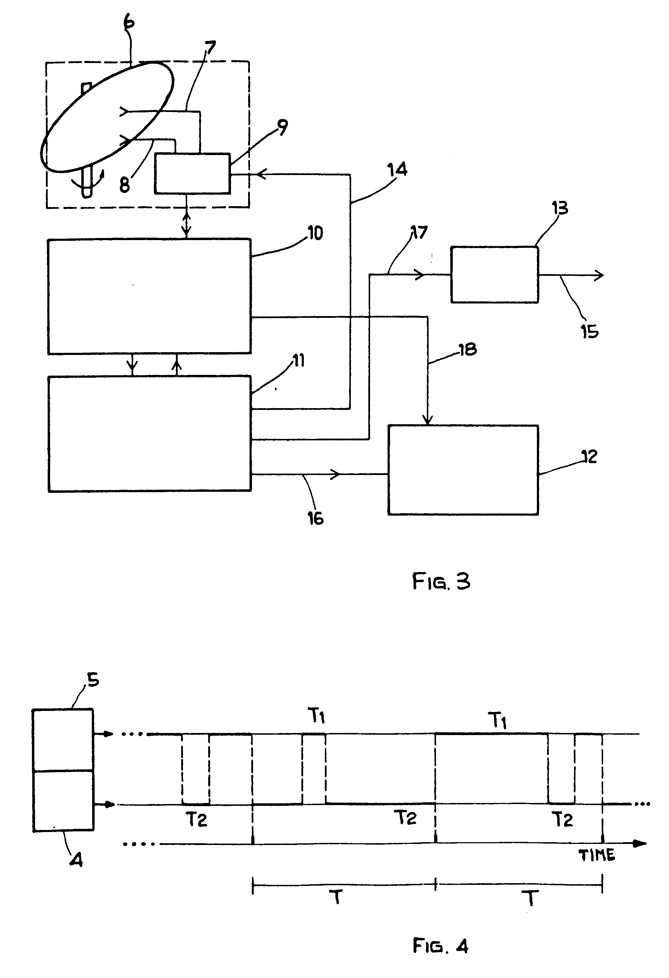

Figure 1 shows, in perspective view and schematically, the principle of fan beam scanning in elevation during the normal run of the automatic radiation program, where a large volume (high plus low elevation) is to be scanned and no tracking is under way; the transition 3 from low beam 1 to high beam 2 and vice verse, takes place at the end of each horizontal scanning and it is unperceivable and of extremely short duration, being determined by the high-speed microwave switch 9 of figure 3 which will be described below.

If so required by the field application, only part 1 of the beam (or only part 2) is scanned by the program.

Figure 2 shows a vertical cross section through the search fan beam in elevation as obtained after one complete cycle of the search program shown as an example in figure 1: it should be noted that the diagram 4, pointing horizontally for detection of mainly low level attacks, is of a shape different from diagram 4, which points high for detection of mainly high drive attacks and, together, the fan beams 4 and 5 represent the desired well known $cosec^2$ covering, here illustrated as an example.

Figure 3 shows the main blocks of which the 2-D radar of the invention is composed, where in particular the reflector 6 of the rotating antenna (which rotates around a vertical shaft) is supplied either by the feeder 7 or by the feeder 8 to form the fan beams 4 or 5, respectively, of figure 2; the feeder selection, both for the transmission and for the reception of signals pertaining to part 10, which consists of a transmitter-receiver of the prior art, takes place in the microwave switch 9, controlled via the digital signal 14 generated in the computer block and corresponding interfaces 11 which complete the conventional signal processing task through a data extractor and tracker, not represented, the latter being a device well known to those skilled in the art,which processes past and present data of every target and extrapolates those data for a tracking (TWS) of the corresponding trajectories.

The radar according to the invention is completed by the radar console 12, where the operational control and the tactical utilization of the radar takes place, the aerial space situation being displayed on the PPI through the radar processed video connection 18, together with the typical alphanumerical symbols and messages generated by the above processor regarding tracks and state of switch 9, through connection 16. The tracking data are conveyed from the processor through the connection 17 to the data link interface 13, which enables the radar system according to the invention to communicate the above data 15 to users.

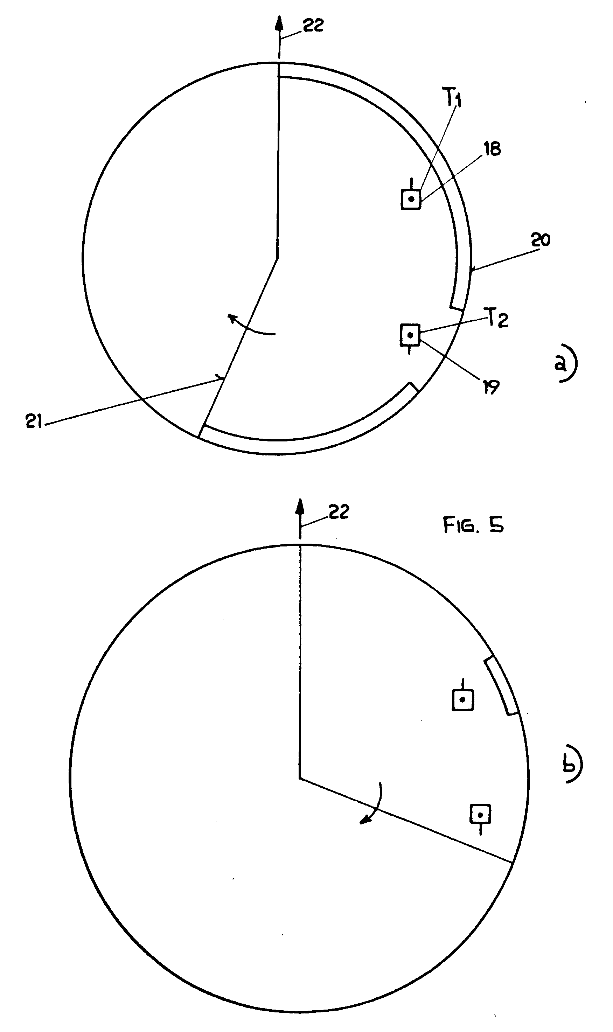

Figure 4 shows as a linear function of the time of revolution T of the antenna (or of the horizontal angle of tracking of the beams) an example of how the scanning sequence in elevation of the beams will automatically change in the presence of two targets in tracking; in this case, the normal vertical scanning program is interrupted so as to illuminate continuously either with the high beam 5 the target $T_1$ detected as "high" by the tracker or with the low beam 4 the target $T_2$ detected as "low" by the tracker at every revolution of the antenna.

Figure 5 shows two pictures of the radar PPI according to the invention, taken in two consecutive revolutions for the case of tracking given as an example in figure 4. The north is indicated by the arrow 22. The different symbols 18 and 19 are allocated by the tracker processor on the estimated positions of the high and low targets, $T_1$ and $T_2$ respectively, while the intensified edge 20 is drawn by the current beam of the PPI which indicates the azimuth position of the antenna in the only regions in which the beam is high, and to which priority is given with respect to the succeeding revolution, illustrated in figure 5b, because the latter corresponds to the "low beam" logic in the alternation, given by way of example, of "one revolution high, one revolution low"; in fact, in figure 5b, only within the estimable azimuthal position of $T_1$ the switch is made to change over to the high elevation beam.

The following further detailed description will better explain the operation and characteristics of the radar according to the invention. The 2-D doppler radar for air-route surveillance according to the invention is capable of providing an elevation coverage pattern either of the low level type, as indicated by beam 4 of figure 1, or of the high altitude type, as is correspondingly indicated by beam 5 which rotates along track 2; or patterns 4,5 are scanned, for example, alternately every complete horizontal revolution of the antenna: the above possibilities are chosen according to circumstances depending on the location of the radar itself, on the type of aerial attack expected, etc., by the radar operator at the console 12. While the shape of said beams is not an essential characteristic of the present invention and it does not limit or reduce the peculiarities which shall be described below, the subject radar generates those particular shapes of Figure 2(which are known to those skilled in the art to give a typical $cosec^2$ global pattern) by making use of an original single antenna provided with two feeders (7,8) and a double-curvature reflector, as described in the Italian patent application No. 21753 A/83 filed in the name of this same applicant.

Said console is operationally connected with the computer 11 which is part of the radar; said computer has a program which consequently operates the desired surveillance scanning sequence 1 and/or 2, through the actuator of switch 9 which will change over to the one or the other of said antenna feeders the transmission and reception fan beams of the radar itself.

When, during said scanning sequence, a target is revealed by the radar receiver included in block 10 of Figure 2, the corresponding signal - processed by the computer and converted into bearing distance and elevation beam of detection, through the well-known devices contained in the block 10 of Figure 3 - is displayed on the PPI of the console 12, with a video blip at a distance from the center proportional to the distance datum, at a bearing angle corresponding to the angle datum and with the elevation beam represented by the presence or absence of a bright segment at the border of the PPI in the radius having the same bearing of the video pulse track depending on whether a high or a low beam respectively is present. The latter information is conveyed to the PPI thanks to its connection 16 with the computer 11.

Said detected target is also conveyed to the computer block 11, where its geometrical data - distance, bearing and elevation detection beam - if a plot of the corresponding target trajectory is desired by the operator-are processed by the TWS tracker program, to obtain the current damped trend of the trajectory itself and the current estimate of the future points in time, prior to any new measurement (radar detection).

What is said above with reference to one target can be repeated for every other target which together with the first one may be detected on any of the two above mentioned elevation beams.

Because the above scanning sequence would permit to illuminate each target (and therefore to have a useful detection signal) once every two antenna revolutions, which would result - as is well known - in a much lower precision of the tracker with respect to an illumination for every revolution of the antenna, the above beam control program is provided with an arrangement by which for every horizontal angle from $\alpha_i - \Delta$ to $\alpha_i + \Delta$, where $\alpha_i$ is the extrapolated angle where the return of the echo of target "i" is expected for the present antenna revolution, and $\Delta$ is a small angle of indetermination of the target's position in the neighborhood of $\alpha$, the switch 9 will be operated so as to emit the radiation fan beam in which the target "i" is estimated to find itself by the tracker, this estimate being made with known calculation means, applied to the "history" of each trajectory preceding the time instant considered (elevation estimate and extrapolation, absence of a blip, presence of a blip on two succeeding revolutions in different beams, etc.).

The above is illustrated with two examples, in Figure 4 which shows how, each target being so illuminated normally by the proper beam at each antenna revolution, the precision of the tracker for the estimate of each trajectory is at the same high value typical of the corresponding conventional 2-D radar.

The above switch control program has also a provision by which for the space regions which are usually not illuminated because of the adaptive scanning sequence described above, a check-out is made as to their space-time repetitivity, and every N (for ex. 3 or 4) complete antenna revolutions the switch is automatically operated to illuminate them (see time instants T, in Figure 4) so that:

- no region is left completely blind to the radar for a tactically significant time;
- no significant loss of precision is suffered by the tracker when, in the angles $\alpha_i \pm \Delta$ where each target is expected to be, at intervals it is willingly not illuminated.

The control program for the above switch has also an arrangement by which, if said deflection angles $\alpha_i \pm \Delta$ are totally or partly common to 2 targets which find themselves in 2 different beams, the scanning sequence is made to follow normally for these angles the sequential alternating base program indicated in Figure 1.

The control program for the above switch is obviously time related to the characteristic times of the radar (time of insistence on the target, pulse repetition frequency) so that its transition from one state to another may happen in time instants which will not disturb the typical 2-D normal sequence of signal transmission and reception, and therefore it will be clear to those skilled in the art that there is an optimum selection for the radar characteristics per se, for the switch transit times (even if infinitesimal) and for the delay times of the computer with its interfaces.

The data of the trajectories tracked under form of symbols suitably located on the PPI (12) of a given type - if a high elevation target is involved - or of another type - if a low elevation target is present - and under form of coded distance, direction and rough elevation data are input to the data link 13 for transmission to outside (15), obviously for all target reports.

It has thus been shown how, even if the radar according to the present invention is a 2-D radar as regards

- composition and simplicity
- operational control
- tracking precision
- elevation volume monitored,

thanks to the arrangement and features according to the invention the typically 2-D radar has gained new and important characteristics such as:

- optimization on the vertical plane of the radiation emitted, due to the possibility not to radiate where it is not deemed to be required to do so, thanks to simple means and procedures for each surveillance direction angle;
- knowledge of an additional information on the trajectories tracked, namely elevation, which - even if rough - permits to evaluate effectively the menace and to decide immediately the most suitable defensive countermeasures both locally, at the radar console, and remotely at the data link terminals associated with the radar; those characteristics obtainable being undoubtedly higher than the corresponding ones of the usual 2-D radars.

Obviously, many changes and modifications to the above described embodiment of the invention can be carried out without departing from the scope thereof.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. Two-dimension pulse doppler radar for air-route surveillance comprising:
   - means (10) for pulse transmission-reception;
   - computer means (11) operatively connected to said means (10) for pulse transmission-reception, said computer means (11) processing and detecting target parameters, and tracking the corresponding target trajectories;
   - a command control console (12) equipped with a plan position indicator for displaying said target parameters processed by said computer means (11); and
   - an antenna (6) mechanically rotated around a vertical radar shaft to cover the entire radar search volume, CHARACTERIZED IN THAT said antenna (6) includes a double curvature reflector, said double curvature reflector generating a first radiation pattern (4) and a second radiation pattern (5), said first and second radiation patterns (4,5) being highly directive in an azimuth plane and very wide in an orthogonal elevation plane, said first and second radiation patterns (4,5) being oriented, in their maximum gain direction, in said azimuth plane in the same direction and in said elevation plane in two directions such as to overlap partially, said first radiation pattern (4) providing for a low portion coverage of said elevation plane, said second radiation pattern providing for a high portion coverage of said elevation plane, said radar further comprising:
   - two independent feeders (7,8) connected to said antenna (6); and
   - a high speed electrically operated switch (9) connecting, when actuated by said computer means (11), alternatively one of said feeders (7,8) to said double curvature reflector of said antenna (6) and causing said reflector to alternatively generate said first and second radiation patterns (4,5) for illuminating each tracked target by the radiation pattern in which said target is estimated to be found on the basis of the tracked trajectory, at each antenna revolution, such as to avoid disturbance of radar operation and to detect both low and high flying targets during a single complete revolution of said antenna (6).

2. Two-dimension pulse doppler radar according to claim 1, characterized in that said computer means (11) is actuating through said high speed electrically operated switch (9) the scanning sequence of said first and second radiation patterns (4,5), whereat said computer means (11) alternatively activate, during a single complete revolution of said antenna (6), both said first radiation pattern (4) so as to detect a low flying target ($T_2$) and said second radiation pattern (5) so as to detect a high flying target ($T_1$); and in that said high speed switch means (9) is connected via a 1-bit digital/analog converter to said computer means (11), said high speed switch means (9) including a commutation current amplifier; and in that said command control console (12) is connected via lead (16) to said computer means (11) and includes input means for inputting said scanning sequence into said computer means (11).

3. Two-dimension pulse doppler radar according to claims 1 or 2, characterized in that said radar further includes:
   - an electronic device for measuring the antenna angle, said electronic device being connected to said computer means (11) and supplying thereto an electrical signal corresponding to the current antenna angle; and

- data link interface means (13) connected to said computer means (11), said data link interface means (13) transmitting to data link users (15) data calculated by said computer means (11) corresponding target parameters.

4. Two-dimension pulse doppler radar according to one or more of claims 1-3, characterized in that said command control console (12) includes:

- an interface with a digital 1-bit output gate, said interface comprising an electronic delay circuit which enables a monostable circuit, said interface connecting said computer means (11) to a video input of said plan position indicator; and

- a digital multi-bit output interface connecting said computer means (11) to a symbol generator within said plan position indicator, said symbol generator being provided with two pre-programmed electronic masks, one of which generates a low elevation target tracking symbol ($T_1$) and the other a high elevation tracking symbol ($T_2$), said electronic masks being selected in alternative according to a digital code sent by said computer means (11) and decoded in a digital decoder provided within said symbol generator.

5. Two-dimension pulse doppler radar according to one or more of claims 1-4, characterized in that said switch (9) is a ferrite type switch.

6. Two-dimension pulse doppler radar according to claim 1, characterized in that it includes a data link interface (13) providing for a link between said computer means (11) and external devices.

**Patentansprüche**

1. Zweidimensionales Impuls-Doppler-Radar für die Flugbahnüberwachung, enthaltend:

- eine Impuls-Sende-Empfangs-Einrichtung (10);

- einen Rechner (11), der betriebsmäßig an die Impuls-Sende-Empfangs-Einrichtung (10) angeschlossen ist, die Zielparameter feststellt und verarbeitet und die entsprechenden Zielflugbahnen verfolgt;

- eine Befehlssteuerkonsole (12) mit einer Panoramaanzeige zur Darstellung der vom Rechner (11) verarbeiteten Zielparameter und

- eine Antenne (6), die mechanisch um eine senkrechte Radarachse gedreht wird, um das ganze Radar-Suchvolumen zu überstreichen, dadurch gekennzeichnet, daß die Antenne (6)

- einen doppelt gekrümmten Reflektor aufweist, der ein erstes Strahlungsdiagramm (4) und ein zweites Strahlungsdiagramm (5) erzeugt, wobei die beiden Strahlungsdiagramme (4, 5) in einer Azimutebene eine hohe Richtwirkung haben und in einer senkrechten Elevationsebene sehr breit sind, und wobei die beiden Strahlungsdiagramme (4, 5) mit der Richtung ihres maximalen Gewinns in der Azimutebene in der gleichen Richtung und in der Elevationsebene in zwei Richtungen ausgerichtet sind, so daß sie sich teilweise überlappen und das erste Strahlungsdiagramm (4) für einen geringen Überdeckungsanteil der Elevationsebene, das zweite Strahlungsdiagramm (5) hingegen für einen großen Überdeckungsanteil der Elevationsebene sorgt,
und daß das Radar weiterhin

- zwei unabhängige, mit der Antenne (6) verbundene Zuleitungen (7, 8) und

- einen elektrisch betätigten Hochgeschwindigkeitsschalter (9) aufweist, der, wenn er durch den Rechner (11) betätigt wird, abwechselnd eine der Zuleitungen (7, 8) mit dem doppelt gekrümmten Reflektor der Antenne (6) verbindet und diesen veranlaßt, abwechselnd das erste und zweite Strahlungsdiagramm (4, 5) zu erzeugen, um jedes verfolgte Ziel bei jeder Antennenumdrehung mit demjenigen Strahlungsdiagramm auszuleuchten, in dem auf der Grundlage der verfolgten Flugbahn angenommen wird, das Ziel zu finden, um dadurch Störungen der Radarfunktion zu vermeiden und während einer einzigen vollständigen Umdrehung der Antenne (6) sowohl niedrig als auch hoch fliegende Ziele festzustellen.

2. Zweidimensionales Impuls-Doppler-Radar nach Anspruch 1, dadurch gekennzeichnet, daß der Rechner (11) über den elektrisch betätigten Hochgeschwindigkeitsschalter (9) die Absuchreihenfolge mit dem ersten und zweiten Strahlungsdiagramm (4, 5) betätigt, wobei der Rechner (11) während einer einzigen vollständigen Drehung der Antenne (6) abwechselnd sowohl das erste Strahlungsdiagramm (4) aktiviert, um ein niedrig fliegendes Ziel ($T_2$) festzustellen, als auch das zweite Strahlungsdiagramm (5) aktiviert, um ein hoch fliegendes Ziel (T₁) fest-
zustellen, daß der Hochgeschwindigkeitsschal-
ter über einen 1-Bit-Digital/Analog-Wandler an
den Rechner (11) angeschlossen ist und einen
Umpolstromverstärker enthält, und daß die Befehlssteuerkonsole (12) über eine Leitung (16)
an den Rechner (11) angeschlossen ist und ein
Eingabemittel zum Eingehen der Suchreihenfolge in den Rechner (11) aufweist.

3. Zweidimensionales Impuls-Doppler-Radar nach
den Ansprüchen 1 oder 2, dadurch gekennzeichnet, daß es weiterhin enthält:
    - eine elektronische Einrichtung zur Messung des Antennenwinkels, die an den
      Rechner (11) angeschlossen ist und dorthin ein elektrisches Signal entsprechend
      dem jeweiligen Antennenwinkel liefert
      und
    - eine Datenübermittlungsschnittstelle (13),
      die an den Rechner (11) angeschlossen
      ist und an Datenübermittlungsnutzer (15)
      vom Rechner (11) berechnete Zielparameterdaten überträgt.

4. Zweidimensionale Impuls-Doppler-Radar nach
einem oder mehreren der Ansprüche 1 bis 3,
dadurch gekennzeichnet, daß die Befehlsssteu-
erkonsole (12) enthält:
    - eine Schnittstelle mit einem 1-Bit-Ausgangstor, wobei die Schnittstelle eine
      elektronische Verzögerungsschaltung
      aufweist, die eine monostabile Schaltung
      aktiviert, und den Rechner (11) mit einem
      Video-Eingang der Panoramaanzeige
      verbindet, und
    - eine digitale Mehrfach-Bit-Schnittstelle,
      die den Rechner (11) mit einem Symbol-
      generator innerhalb der Panoramaanzei-
      ge verbindet, wobei der Symbolgenerator
      mit zwei vorprogrammierten Masken versehen ist, von denen die eine ein Zielverfolgungsysmbol für niedrige Elevation
      (T1) und die andere ein Zielverfolgungssymbol für hohe Elevation (T2) erzeugt
      und die beide abwechselnd entsprechend einem Digitalcode ausgewählt
      werden, der vom Rechner (11) ausgesandt und von einem digitalen Dekodierer im Symbolgenerator entschlüsselt
      wird.

5. Zweidimensionales Impuls-Doppler-Radar nach
einem oder mehreren der Ansprüche 1 bis 4,
dadurch gekennzeichnet, daß der Schalter (9)
ein Schalter vom Ferrit-Typ ist.

6. Zweidimensionales Impuls-Doppler-Radar nach
Anspruch 1, dadurch gekennzeichnet, daß es
eine Datenübermittlungsschnittstelle (13) zur
Schaffung einer Verbindung vom Rechner (11)
zu äußeren Einrichtungen enthält.

**Revendications**

1. Radar bidimensionnel à impulsions à effet
Doppler pour la surveillance de trajectoires
dans l'espace comportant :
    - un transmetteur-récepteur d'impulsions
      (10) ;
    - un ordinateur (11) raccordé de manière
      opérationnelle audit transmetteur-récepteur (10), ledit ordinateur (11) traitant et
      détectant les paramètres d'objectifs, et
      poursuivant les trajectoires correspondantes de ces objectifs ;
    - une console de contrôle et de commande (12) équipée d'un indicateur de position plan pour afficher lesdites paramètres des objectifs traités par ledit ordinateur (11) ; et
    - une antenne (6) tournant mécaniquement
      autour d'un axe de radar vertical pour
      couvrir le volume total de surveillance du
      radar, caractérisé en ce que ladite antenne (6) comporte un réflecteur à double
      courbure engendrant une première forme
      de faisceau rayonnant (4) et une seconde
      forme de faisceau rayonnant (5), lesdites
      première et seconde formes de faisceau
      rayonnant (4, 5) étant très directives
      dans un plan azimutal et très larges dans
      un plan orthogonal en élévation, lesdites
      première et seconde formes de faisceaux
      rayonnants (4, 5) étant orientées dans
      leur direction de gain maximal, dans la
      même direction dans ledit plan azimutal
      et dans deux directions telles qu'elles se
      chevauchent partiellement dans ledit plan
      en élévation, ladite première forme de
      faisceau rayonnant (4) couvrant une partie basse dudit plan en élévation, et ladite seconde forme de faisceau rayonnant
      (5) couvrant une partie élevée dudit plan
      en élévation, ledit radar comportant en
      outre :
    - deux alimentations indépendantes (7, 8)
      raccordées à ladite antenne (6) ; et
    - un commutateur à grande vitesse (9)
      fonctionnant électriquement qui raccorde
      alternativement lorsqu'il est actionné par
      ledit ordinateur (11) l'une desdites alimentations (7, 8) dudit réflecteur à double courbure de ladite antenne (6) de
      sorte que ledit réflecteur engendre alternativement lesdites première et seconde forme de faisceaux (4, 5) pour illuminer chaque objectir poursuivi par la forme de faisceau dans laquelle ledit objectir est estimé se trouver sur la base de la trajectoire poursuivie, à chaque révolution de l'antenne, de manière à éviter tout dérangement dans le fonctionnement du radar et à détecter à la fois des objectifs volant à basse ou haute altitude durant une seule révolution complète de ladite antenne (6).

2.  Radar bidimensionnel à impulsions à effet Doppler selon la revendication 1, caractérisé en ce que ledit ordinateur (11) déclenche par l'intermédiaire dudit commutateur (9) à grande vitesse fonctionnant électriquement la séquence de balayage desdites première et seconde formes de faisceaux, tandis que ledit ordinateur (11) active alternativement durant une simple révolution complète de ladite antenne (6), à la fois ladite première forme de faisceau (4) afin de détecter un objectir volant bas (T2) et ladite seconde forme de faisceau (5) afin de détecter un objectif volant haut (T1), en ce que ledit dispositif de commutation à grande vitesse (9) est raccordé par l'intermédiaire d'un convertisseur digital analogique à 1bit audit ordinateur (11), ledit dispositif de commutation à grande vitesse (9) comportant un amplificateur de courant de commutation et en ce que ladite console (12) de contrôle et de commande qui est raccordée par un conducteur (16) audit ordinateur (11) comporte une entrée pour entrer ladite séquence de balayage dans ledit ordinateur (11).

3.  Radar bidimensionnel à impulsions à effet Doppler selon l'une quelconque des revendications 1 ou 2, caractérisé en ce que ledit radar comporte de plus :
    -   un dispositif électronique pour mesurer l'angle de l'antenne, ledit dispositif électronique étant réccordé audit ordinateur (11) et lui fournissant un signal électrique correspondant à l'angle actuel de l'antenne ;
    -   et une interface de liaison (13) pour les données raccordé audit ordinateur (11), ladite interface de liaison (13) transmettant à des utilisateurs reliés (15), les données calculées par ledit ordinateur (11) correspondant aux paramètres de l'objectif.

4.  Radar bidimensionnel à impulsions à effet Doppler selon l'une quelconque des revendications 1 à 3, caractérisé en ce que ladite console (12) de contrôle et de commande comporte :
    -   une interface avec une porte de sortie digitale à 1 bit, ladite interface comportant un circuit retardateur électronique qui active un circuit monostable, ladite interface raccordant ledit ordinateur (11) à une entrée vidéo dudit indicateur plan de position ;
    -   et une interface de sortie digital multi-bit raccordant ledit ordinateur (11) à un générateur de symboles disposé dans ledit indicateur plan de position, ledit générateur de symboles étant pourvu de deux masques électroniques pré-programmés, dont l'un engendre un symbole (T1) de poursuite d'un objectif de faible altitude, et l'autre un symbole (T2) de poursuite d'un objectif de forte altitude, lesdits masques électroniques étant sélectionnés alternativement selon un code digital envoyé par ledit ordinateur (11) et décodé dans un décodeur digital prévu dans ledit générateur de symboles.

5.  Radar bidimensionnel à impulsions à effet Doppler selon l'une quelconque des revendications 1 à 4, caractérisé en ce que ledit commutateur (9) est un commutateur du type ferrite.

6.  Radar bidimensionnel à impulsions à effet Doppler selon la revendication 1, caractérisé en ce qu'il comporte une interface de liaison (13) pour les données prévue pour servir de liaison entre ledit ordinateur (11) et des appareils extérieurs.

Fig. 1

Fig. 2

Fig. 3

Fig. 4

FIG. 5